# EUROPEAN PATENT SPECIFICATION

(11) **EP 3 513 853 B1**
(45) Date of publication and mention of the grant of the patent: **02.12.2020**
(21) Application number: 17917858.7
(22) Date of filing: 11.10.2017
(51) Int. Cl.: B01D 17/022, B01D 24/02, B01J 20/32, B01D 17/02, B01D 17/00, B01D 24/46, B01J 20/14, C02F 1/40

(54) **METHOD OF EMULSION SEPARATION**
VERFAHREN ZUR EMULSIONSTRENNUNG
PROCÉDÉ DE SÉPARATION D'ÉMULSIONS

(30) Priority: 11.07.2017 RU 2017124417
(43) Date of publication of application: 24.07.2019
(73) Proprietor: LightOre SA, 1201 Geneve (CH)
(72) Inventor: BELOV, Petr Vasil'evich, g. Ul'yanovsk 432072 (RU); ISHKOV, Aleksandr Dmitrievich, Moscow 115597 (RU); KOSYAKOV, Aleksandr Viktorovich, Voronezhskaya obl. g. Voronezh 394051 (RU); KULIGIN, Sergej Vladimirovich, Voronezhskaya obl. g. Voronezh 394007 (RU); DEMIN, Mihail Vladimirovich, g. Ul'yanovsk 432064 (RU); KIRIN, Maksim Petrovich, g. Sevastopol' 299055 (RU); BLAGOV, Andrej Vladimirovich, g. Zelenograd Moscow 103536 (RU); SAL'NIKOV, Evgenij Pavlovich, Voronezhskaya obl. g. Voronezh 394055 (RU); ROVOVOJ, Vadim Vital'evich, pos. Vnukovo Moscow 119027 (RU)
(74) Representative: Winter, Brandl, Fürniss, Hübner, Röss, Kaiser, Polte - Partnerschaft mbB
(86) International application number: PCT/RU2017/000753
(87) International publication number: WO 2019/013668

(56) References cited:
- EP-A1- 0 115 105
- GB-A- 1 435 936
- GB-A- 1 535 481
- RU-C1- 2 077 363
- RU-C1- 2 182 118
- RU-C2- 2 327 518
- RU-U1- 78 436
- RU-U1- 170 334
- US-A- 5 993 659
- US-A1- 2001 020 602
- US-A1- 2012 152 115

## Description

The proposed solution relates to the field of emulsions separation by filtering, in particular, to the field of cleaning liquids from oil and oil products, as well as from organic substances. It can be used in the oil-producing, chemical, petrochemical, food-manufacturing, pharmaceutical, engineering and other sectors of industry, as well as in wastewater treatment systems.

It is known the method of cleaning water from oil and oil products (the USSR Inventor Certificate No. 1662625, MΠ 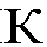 B01D 39/00, 1987), which includes filtering the emulsion through a layer of granular bed made of granules of oleophilic foamed plastic. The disadvantage of the prior art solution consists in significant technological downtime for the bed replacement since the regeneration of the contaminated bed in this method is not provided.

Another example of filtration with regeneration is provided in US5993659.

The closest to the proposed technical solution is the method of cleaning liquids from oil and oil products (the patent RU No. 2202519, MΠ 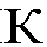 B01D 39/18, 2001) which includes filtering the emulsion through a layer of granular bed and regeneration of the bed by means of its double mechanical pressing with intermediate washing of the layer with the filtrate. The disadvantage of the prior art solution is the low efficiency of the emulsion separation process due to:
- low degree of the filtering bed regeneration, which cumulatively reduces the rate and quality of filtration, duration of filter cycle, lifetime of the filtering bed and the unit's capacity;
- duration of the regeneration cycle (pauses in operation), which includes its double pressing in addition to washing the bed;
- complexity of the emulsions separation unit's design, containing a device for mechanical pressing of the bed;
- additional energy consumption for mechanical pressing of the bed.

The technical result of the proposed solution consists in the enhancement of efficiency of the emulsions separation process.

The specified technical result is achieved by the fact that in the method of emulsions separation, which includes filtering the emulsion through a granulated bed layer and regeneration of the bed, at least part of the surface of granules of the bed (not less than 55%, optimally 70-95% of the total surface) is made nonwettable for the dispersed phase in conditions of filtration (temperature, filtration rate, pressure) due to its covering with a dispersion medium. For this purpose, prior to filtering the bed is impregnated with the dispersion medium; and regeneration of the bed is carried out by backwashing. Application of the aforementioned features excludes the possibility of the dispersed phase sticking to the part of surface of the granule covered with the dispersion medium, facilitates and accelerates regeneration of the bed, which improves efficiency of the emulsions separation process, raises performance, simplifies the unit's design and reduces specific energy consumption.

Covering of a part of the surface of granules with a dispersion medium can be performed, e. g., in the form of a gel. The open-porous granules impregnated with dispersion medium is used as a filtering bed since the granules' open pores possess a capillary effect in relation to the dispersion medium, ensuring retention of the dispersion medium on the surface of granule. The invention is therefore defined as in claim 1.

Also the granules, at least the outer layer of which contains particles of abrasive material with the size of not more than 100 µm (mainly not more than 40 µm) and which are rigidly interconnected by sintering or gluing with preservation of existing communicating interstices (pores) between particles, may be used as a filtering bed.

The abrasive material (silicon carbide, natural corundum, emery, diatomite, tripoli, etc.) has sharp edges, which makes it possible to clear clogged pores during the bed backwashing process, increasing its service life. The abrasive surface of granules prevents sticking of granules and overlapping (shielding) of pore inlets of granules with which they contact.

The particle size of the abrasive material determines the pore size (they approximately correspond to each other): when using particles, equivalent diameter of which exceeds 100 µm, the granules with oversized pores are obtained. The granules molding increases the number of open interconnected pores, uniformity of their distribution over the volume of granule and stability of the flow area of pores. Aggregation of particles to each other by sintering or gluing (with a minimum amount of glue so that it does not cover the interstices) allows preserving the interconnected pores between particles.

Formation of the outer layer of granules of filtering bed from particles of an abrasive material with size of not more than 100 µm makes it possible to obtain on the surface of granules microscopic protrusions with a mean height of 1-50 µm, which have sharp edges. This enables the dispersed phase to be fixed on protrusions of granules in the filtering process and provides quick, easy and effective cleaning of granule during its regeneration by backwashing.

As protrusions on the granule surface have open pores possessing a capillary effect with respect to the dispersed phase, this provides more effective fixation of the dispersed phase on the granule surface during filtering, but does not prevent clearing the granule while backwashing, since the dispersed phase has a small contact surface with the granule (through protrusions only).

When cleaning water from oil and oil products, all the aforementioned features are implemented in a filtering bed, at least outer layer of granules of which is made of diatomite based material (with the particle size of diatomite not more than 50 µm, and the mean height of protrusions on the granule surface is 1-25 µm). In addition, since diatomite is a natural abrasive, the interaction of granules in the process of the filter backwashing enables cleaning clogged pores.

The filtration rate should be in the range of 5 to 50 m/h. When the filtration rate is less than 5 m/h, the filtering efficiency falls due to a decrease in the rate of interaction of the dispersed phase drops with granules, resulting in their "breaking through" the bed. When the filtration rate exceeds 50 m/h, the filtering efficiency falls due to detachment of the dispersed phase drops from granules of the filtering bed.

The backwashing rate should be in the range of 5 to 110 m/h. When the backwashing rate is less than 5 m/h, the backwashing efficiency is extremely low due to the lack of fluidization of the filtering bed granules. When the backwashing rate exceeds 110 m/h, the process efficiency decreases due to the destruction and entrainment of the filtering bed granules.

The granule has a rounded shape, which reduces the granules tendency to agglomeration and destruction, as well as it reduces the entrainment of material when backwashing. The rounded shape of granules improves the flow ability and portioning of material, facilitates its surface treatment, provides higher space filling and stability of the mass size distribution of product heightwise when backfilling large volumes. More even interstices between granules increase the filtration rate and time of filter operation until regeneration (which is carried out with performance reduced below the minimum value). The hydraulic resistance of filter and number of stagnant zones decrease; the wear (abrasion) of granules decreases, since the protruding parts of granules are primarily destroyed. During the filter backwashing, the mobility of granules and cleaning of their surface increase; the regeneration time and pressure required for weighing the layer are reduced.

The equivalent diameter of granules should be in the range of 0.1 to 6.0 mm. With a smaller equivalent diameter, the granules are unaffected by regeneration, since they are washed out during the backwashing process. In addition, when the equivalent diameter of granules is less than 0.1 mm, the channels between granules are very quickly filled with the dispersed phase, resulting in its periodic "breakthrough". With an equivalent diameter of granules more than 6.0 mm, too large channels are formed between granules and the filter stops functioning.

The height of the filtering bed layer should be in the range of 0.3 to 5.0 m. With the height of the bed layer less than 0.3 m, the operating efficiency decreases due to: a) insufficient area of emulsion interaction with the filtering bed and time of contact (which reduces the emulsion separation quality); b) fast clogging of the filtering bed (which increases the down time for regeneration of the bed); c) occurring "breakthrough" of emulsion through the filtering bed layer. When the height of the filtering bed layer is more than 5.0 m, the filtering efficiency decreases due to the resistance growth of the filtering bed layer (including non-working lower layers), decrease in speed and quality of regeneration of the filtering bed and increase in the cost of placing and maintaining the device.

The ratio of the height of the filtering bed layer to the maximum size of the device's flow area must be not less than 0.2. Otherwise, due to the uneven distribution of the filtering bed (occurring after washing the bed or due to the inclination of the support grid) the emulsion "breakthrough" is possible in places where the height of the filtering bed layer is minimum, which reduces filtering quality and efficiency.

Since the filtering quality is in large part determined by the area of the contact of emulsion with the filtering bed, the height of the filtering bed layer must be not less than 50 equivalent diameters of its granules. With a lesser height of the bed layer, significant decrease in filtering quality and efficiency is observed.

The method of emulsions separation is implemented as follows.

The device for emulsions separation contains a case with the diameter of 0.4 m and height of 4.0 m, wherein the filtering bed is located. Granules formed from crushed particles of diatomite and burned at the temperature of 700-1,000 °C are used as the filtering bed, which ensure sintering of particles of diatomite to each other while retaining pores available between the particles.

Diatomite is well wetted by both water and oil. However, it has a porous structure, and if its pores are filled (a granule is impregnated) with one of these liquids, then zones nonwettable for another liquid are created at exit points of pores on a granule surface. Therefore, when cleaning water from oil, the filtering bed is pre-filled with clean water, which fills the pores of granules, creating zones which are nonwettable for oil (dispersed phase) at exit points of pores on a granule surface. Only then filtering of the water-oil emulsion through the layer of diatomite granules is started.

Since the flow rate decreases sharply in the course of filtering in the pyramid-like cavities between granules, the dispersed phase begins to settle on protrusions of the granules surface (primarily in side cavities), gradually filling these cavities completely. When backwashing, the granules are shifted, spatial structure of cavities is destroyed, and dispersed phase accumulated in the pyramid-like cavities and on the surface of granules is carried away by the washing liquid. In addition, granules of the filtering material rub against each other during the backwashing, removing rests of contamination from their surface. After regeneration, the granules contain no more than 1 wt% of oil, which is consolidated in these pores, having displaced water from the pores in protrusions. Herewith, the residual amount of oil in granules does not depend on the number of regenerations carried out with it; i. e. the cumulative effect of the dispersed phase accumulation in granules is absent.

### Examples of specific performance.

Example 1. The filtering bed of diatomite granules with the equivalent diameter of 0.7-1.7 mm with height of the filtering layer of 1.2 m (which increases under fluidization during backwashing by 0.6 m) was used to clean water from oil. The ratio of height of the filtering bed layer to diameter of the device is 4.0 (i. e. over 0.2); and the height of the bed layer is equal to 1,000 equivalent diameters of granules (i. e. over 50). The filtration rate was 15 m/h, and backwashing rate was 30 m/h. The emulsion temperature was in the range of 74-76 °C. The pressure upstream of the filter was 1.6 kg/cm². The oil content in the water-oil emulsion prior to filtering was 30 mg/l, and after a single passing through the filter was 0.5-0.8 mg/l.

When reducing the height of the filtering layer to 0.25 m (below 0.3 m), the bed operation time till regeneration decreases by 12-14 times, and the oil content in the water-oil emulsion after a single passing through the filter is 5.2 mg/l.

When reducing the height of the filtering layer to 7.0 cm (the ratio of height of the filtering bed layer to diameter of the device is less than 0.2), the oil content in the water-oil emulsion after a single passing through the filter is 17.4 mg/l.

When reducing the height of the filtering layer to 5.0 cm (the height of the filtering bed layer is less than 50 equivalent diameters of its granules), the oil content in the water-oil emulsion after a single passing through the filter is 27.3 mg/l.

Example 2. The filtering bed of diatomite granules with the equivalent diameter of 0.7-1.7 mm with height of the filtering layer of 2.0 m (which increases under fluidization during backwashing by 1.0 m) was used to clean water from oil. The filtration rate was 20 m/h, and backwashing rate was 35 m/h. The emulsion temperature was in the range of 12-15 °C. The pressure upstream of the filter was 1.6 kg/cm². The oil content in the water-oil emulsion prior to filtering was 300 mg/l, and after a single passing through the filter it was 0.8 mg/l.

The proposed solution can be used, in particular, for oil dehydration in oil fields; dehydration of oil wastes and used oil prior to their disposal; regulation of the fat content in milk and cream; dehydration of transformer and turbine oil, cleaning wastewater from oil and oil products, etc.

## Claims

1. The method of emulsions separation, which includes filtering the emulsion through a granulated bed layer and regeneration of the bed, ***characterized in that,*** at least, part of the surface of the bed granules is made nonwettable for the dispersed phase due to its covering with a dispersion medium; the bed is impregnated with the dispersion medium prior to filtering; and regeneration of the bed is carried out by backwashing, wherein open-porous granules impregnated with a dispersion medium are used as the bed granules, open pores of which possess a capillary effect in relation to the dispersion medium.

2. The method according to claim 1, **characterized in that** at least the outer layer of the bed granules contains particles of abrasive material with the size of not more than 100 µm, rigidly interconnected with preservation of existing communicating pores between particles.

3. The method according to claim 1, **characterized in that** at least the outer layer of the bed granules is made of diatomite based material.

4. The method according to claim 1, **characterized in that** the filtration rate is in the range of 5 to 50 m/h.

5. The method according to claim 1, **characterized in that** the backwashing rate is in the range of 5 to 110 m/h.

6. The method according to claim 1, **characterized in that** granules have a rounded shape; and their equivalent diameter is in the range of 0.1 to 6.0 mm.

7. The method according to claim 1, **characterized in that** the height of the bed layer is in the range of 0.3 to 5.0 m.

8. The method according to claim 1, **characterized in that** the height of the bed layer is not less than 50 equivalent diameters of granules.

## Patentansprüche

1. Die Methode der Emulsionsentmischung, einschließlich die Filtrierung der Emulsion durch eine granulierte Filterschicht und Regeneration der Filterschicht, **gekennzeichnet dadurch, dass** zumindest ein Teil der Oberfläche der Filterschichtgranulen unbenetzbar für die disperse Phase infolge ihrer Deckung mit dem Dispersionsmedium gemacht ist; die Filterschicht ist vor der Filterung mit dem Dispersionsmedium getränkt; die Regeneration der Filterschicht geschieht mittels Rückspülung, wobei als Filterschichtgranulen die offenporigen Granulen getränkt mit dem Dispersionsmedium angewendet sind, die offenen Poren derer über einen Kapillareffekt gegenüber dem Dispersionsmedium verfügen.

2. Die Methode nach Anspruch 1, **gekennzeichnet dadurch, dass** zumindest die äußere Schicht der Filterschichtgranulen die Partikel eines abrasiven Materials mit der Größe nicht mehr als 100 µm beinhaltet, die fest miteinander verbunden sind unter Einhaltung der existierenden und mineinander in Verbindung stehenden Poren zwischen den Partikeln.

3. Die Methode nach Anspruch 1, **gekennzeichnet dadurch, dass** zumindest die äußere Schicht der Filterschichtgranulen aus Material basiert auf Diatomit besteht.

4. Die Methode nach Anspruch 1, **gekennzeichnet dadurch, dass** die Filtrationsgeschwindigkeit im Bereich von 5 m/h bis 50 m/h liegt.

5. Die Methode nach Anspruch 1, **gekennzeichnet dadurch, dass** die Geschwindikkeit der Rückspülung im Bereich von 5 m/h bis 110 m/h liegt.

6. Die Methode nach Anspruch 1, **gekennzeichnet dadurch, dass** die Granulen eine abgerundete Form aufweisen; wobei derer äquivalenter Durchmesser im Bereich von 0.1 mm bis 6.0 mm liegt.

7. Die Methode nach Anspruch 1, **gekennzeichnet dadurch, dass** die Höhe der Filterschicht im Bereich von 0.3 m bis 5.0 m liegt.

8. Die Methode nach Anspruch 1, **gekennzeichnet dadurch, dass** die Höhe der Filterschicht nicht weniger als 50 äquivalenten Durchmesser der Granulen beträgt.

## Revendications

1. Le procédé de séparation des émulsions qui comprend la filtration de l'émulsion à travers un lit granulaire et la régénération de ce lit, **caractérisé en ce qu'**au moins une partie de la surface des granulés du lit est non mouillablepour la phase dispersée en raison de son revêtement d'unmilieu dispersif ; le lit est imprégné d'unmilieu dispersifavant la filtration ; la régénération de la couche est réalisée par le contre-lavage dans lequel les granulés poreux imprégnés d'un milieu dispersif sont utilisés comme lit granulaire dont les pores possèdent un effet capillaire par rapport au milieu dispersif.

2. Le procédé selon la revendication 1, **caractérisé en ce qu'**au moins la couche externe du litgranulaire contient des particules de matériau abrasif d'une taille ne dépassant pas 100 µm, interconnectées de manière rigide tout en préservant les communications existantes des pores entre les particules.

3. Le procédé selon la revendication 1, **caractérisé en ce qu'**au moins la couche externe du lit granulaire est un matériau à base de diatomite.

4. Le procédé selon la revendication 1, **caractérisé en ce que** lavitesse de filtration se situe entre 5 et 50 m/h.

5. Le procédé selon la revendication 1, **caractérisé en ce que** lavitesse du contre-lavage se situe entre 5 et 110 m/h.

6. Le procédé selon la revendication 1, **caractérisé en ce que** les granulés ont une forme arrondie et leur diamètre équivalent est de l'ordre de 0,1 à 6,0 mm.

7. Le procédé selon la revendication 1, **caractérisé en ce que** la hauteur du lit se trouve entre 0,3 et 5,0 m.

8. Le procédé selon la revendication 1, **caractérisé en ce que** la hauteur du lit n'est pas inférieure à50 diamètres équivalents des granulés.
